# EUROPÄISCHE PATENTANMELDUNG

(11) **EP 1 260 651 A2**
(43) Veröffentlichungstag der Anmeldung: **27.11.2002**
(21) Anmeldenummer: 02019271.2
(22) Anmeldetag: 18.09.1999
(51) Int. Cl.: E04F 15/04, F16B 5/00

(54) **Fussbodenpaneel**

(30) Priorität: 06.11.1998 DE 19851200
(62) Teilanmeldung aus: 99118525.7
(71) Anmelder: Kronotex GmbH & Co. KG, 16909 Heiligengrabe (DE)
(72) Erfinder:
(74) Vertreter: Rehmann, Thorsten, Dipl.-Ing.

(57) **Zusammenfassung**

Fußbodenpaneel mit einer an mindestens einer Seitenkante (Verbindungskante) ausgebildeten Feder und einer an der gegenüberliegenden Seitenkante (Verbindungskante) ausgebildeten, von einem oberen Vorsprung und einem seitlich über den oberen Vorsprung hinausragenden unteren Vorsprung begrenzten Nut, wobei die Feder und die Nut mit zueinander korrespondierenden Rastmitteln versehen sind, so dass zwei gleiche Paneele sowohl in horizontaler als auch in vertikaler Richtung miteinander verriegelbar sind, und wobei die Feder und die Nut mit den zugehörigen Rastmitteln so ausgebildet sind, dass zwei Paneele sowohl durch horizontales Verschieben in Richtung aufeinander zu als auch durch winkliges Einführen der Feder in die Nut miteinander verbindbar sind, wobei das zu der Nut gehörige Rastmittel vollständig in dem Bereich des unteren Vorsprungs angeordnet ist, der seitlich über den oberen Vorsprung hinaus ragt.

## Beschreibung

Die Erfindung betrifft ein Fußbodenpaneel mit einer an mindestens einer Seitenkante (Verbindungskante) ausgebildeten Feder und einer an der gegenüberliegenden Seitenkante (Verbindungskante) ausgebildeten, von einem oberen Vorsprung und einem seitig über den oberen Vorsprung hinausragenden unteren Vorsprung begrenzten Nut, wobei die Feder und die Nut mit zueinander korrespondierenden Rastmitteln versehen sind, so dass zwei gleiche Paneele sowohl in horizontaler als auch in vertikaler Richtung miteinander verriegelbar sind, und wobei die Feder und die Nut mit den zugehörigen Rastmitteln so ausgebildet sind, dass zwei Paneele sowohl durch horizontales Verschieben in Richtung aufeinander zu als auch durch winkliges Einführen der Feder in die Nut miteinander verbindbar sind.

Ein solches Paneel ist beispielsweise aus der US-A-6,006,486 bekannt. Eine Mehrzahl solcher Fußbodenpaneele lassen sich miteinander verbinden, ohne dass sie auf dem Untergrund verklebt oder miteinander durch zusätzliche Verbindungsglieder wie z. B. Schienen verbunden werden müssen. Die Verbindungskanten zweier Fußbodenpaneele können beispielsweise durch geradliniges Ineinanderschieben parallel zum Untergrund ineinandergefügt werden, wobei in diesem Fall zum Erreichen eines Formschlusses zwischen den Verbindungskanten der untere Vorsprung der ersten Verbindungskante während des Zusammenfügens nach unten ausgebogen werden muss und er anschließend auf Grund seiner elastischen Wirkung wieder in seine Ausgangsstellung zurückschnappt und dabei den oberen Vorsprung an der Unterseite der Feder hintergreift, so dass die beiden Verbindungskanten nicht durch einfaches geradliniges Auseinanderziehen getrennt werden können. Solche Paneele werden im Allgemeinen als Klick-Profile bezeichnet.

Nachteilig an den bekannten Paneelen ist, dass beim Verlegen ein bereits verlegtes Paneel deutlich angehoben werden muss, wenn ein neues Paneel angefügt werden soll. Da bereits verlegte Paneele in der Regel mit weiteren Paneelen verbunden sind, lassen sie sich nur schwer vom Untergrund abheben. Bei allzu starker Belastung des unteren Vorsprungs und/oder der Feder kann dabei eine Verbindungskante beschädigt werden.

Miteinander verbundene Paneele müssen dicht aneinander anliegen, damit keine Spaltbildung im Fußboden auftritt, was unter Umständen problematisch sein kann und tendenziell eine hohe Verspannung der beiden Verbindungskanten zweier Paneele im unteren Bereich zwischen dem unteren Vorsprung der ersten Verbindungskante und der Feder der zweiten Verbindungskante zur Folge hat.

Die Herstellung der Verbindungskanten ist bei komplexer Formgebung, insbesondere innerhalb der Nut, in der Regel fertigungstechnisch äußerst schwierig. Insbesondere ist die Führung der zur Ausbildung der Verbindungskanten notwendigen Fräser aufwendig, was zu einem höheren Verschleiß in den Bereichen der aufwendigen Führung führen kann.

Von dieser Problemstellung ausgehend soll das eingangs beschriebene Fußbodenpaneel verbessert werden.

Zur Problemlösung zeichnet sich ein gattungsgemäßes Fußbodenpaneel dadurch aus, dass das zu der Nut gehörige Rastmittel vollständig in dem Bereich des unteren Vorsprungs angeordnet ist, der seitlich über den oberen Vorsprung hinausragt.

Weiter bevorzugt werden die Rastmittel durch an der Unterseite der Feder ausgebildete Zusatzerhöhungen und an der Oberseite des unteren Vorsprungs ausgebildete Zusatzvertiefungen gebildet. Auf diese Weise kann die Feder eines Paneels leicht angewinkelt in die Nut eines weiteren Paneels eingeführt werden. Liegen die beiden Paneele in einer Ebene, wird durch die Rastmittel ein Auseinanderdriften der Paneele verhindert.

Vorzugsweise weisen die Oberseite und die Unterseite der Feder ebene, zueinander geneigte Flächen auf und die Oberseite des unteren Vorsprungs und die Unterseite des oberen Vorsprungs weisen auch ebene, zueinander geneigte Flächen auf. Durch diese Ausbildung können in der Verbindungsstelle hohe Seitenkräfte von den Rastmitteln aufgenommen werden, so dass sich eine besonders haltbare Verbindung einstellt. Außerdem können die Rastmittel an der mit der Nut versehenen Verbindungskante durch vertikales Zuführen eines Fräsers erzeugt werden, so dass eine fertigungstechnisch sehr einfache Lösung gefunden wurde, was die Herstellkosten deutlich reduziert.

Bevorzugt liegen die Oberseite der Feder und die Unterseite des oberen Vorsprungs sowie die Unterseite der Feder und die Oberseite des unteren Vorsprungs bei Ineinanderfügen der Verbindungskanten jeweils aneinander. Dadurch wird eine stabile Verbindung gewährleistet, bei der eine gute Abdichtung zwischen den Anlagekanten an den Oberseiten sowie eine stabile und sehr dichte Verbindung durch die beiden Verbindungsprofile im unteren Bereich erreicht wird.

In einer bevorzugten Ausführungsform der Erfindung sind die erste Verbindungskante und die zweite Verbindungskante derartig ausgebildet, dass sie ohne zeitweises Verformen ineinanderfügbar sind. Dadurch, dass die Vertiefungen, Zusatzvertiefungen, Erhöhungen und Zusatzerhöhungen außerhalb der Nut und weiter außen als die Anlagekante ausgebildet sind, kann die zweite Verbindungskante beim Zusammenfügen in diesem Bereich leicht angehoben werden, ohne dass hierbei die Feder bereits fest in der Aussparung anliegt, so dass ein leichtes Ausheben der zweiten Verbindungskante ohne Verformen oder ohne allzu großes Verformen der Verbindungskanten möglich ist.

Bei Ineinanderfügen einer ersten Verbindungskante und einer zweiten Verbindungskante wird vorteilhafterweise ein oberer Freiraum zwischen den Anlagekanten und der Feder sowie ein unterer Freiraum zwischen einer Vorderseite, der Feder und einem Nutgrund der Aussparung gebildet. Der Freiraum ermöglicht ein bündiges Aneinanderliegen der Anlagekanten. Etwaige Verunreinigungen der Paneele, wie z. B. durch Staub, werden im Freiraum abgelagert und stören dadurch nicht die Verbindung der Anlagekanten.

Bei Ineinanderfügen einer ersten Verbindungskante und einer zweiten Verbindungskante zwischen einer unteren Kante der zweiten Verbindungskante und einer unteren Kante des unteren Vorsprungs verbleibt bevorzugt ein Abstand. Dies ermöglicht es sicherzustellen, dass die Anlagekanten der Paneele die exponiertesten Teile der Verbindung sind und dadurch bündig abschließen.

Bei Ineinanderfügen zweier Verbindungskanten sind die obere Erhöhung und obere Zusatzerhöhung der Feder in der unteren Vertiefung und unteren Zusatzvertiefung des unteren Vorsprungs sowie die untere Zusatzerhöhung in der oberen Zusatzvertiefung der Feder vorteilhafterweise formschlüssig aufnehmbar.

Aufgrund der guten Dichtwirkung von vier Kontaktflächen zwischen dem unteren Vorsprung und der Feder wird ein Eindringen von Schmutz, Feuchtigkeit etc. in die innere Verbindung verhindert. Die Kraft kann auf diese vier Verbindungsflächen verteilt werden, so dass die Erhöhungen und Zusatzerhöhungen selbst relativ klein ausgebildet werden können und dennoch ein laterales Auseinanderziehen gut verhindert wird.

Damit das Verlegen der Paneele vereinfacht wird, ist an der ersten Verbindungskante am oberen Vorsprung vorteilhafterweise ein Gleitpunkt zur Anlage an der Oberseite der Feder einer anliegenden zweiten Verbindungskante ausgebildet.

Die beiden Fußbodenpaneele können mit einer relativ geringen Verspannung oder sogar mit gar keiner Verspannung verbunden werden, was die Gefahr einer Materialermüdung verringert.

Vorteilhafterweise sind die obere Erhöhung der Feder, die obere Zusatzerhöhung der Feder, die untere Erhöhung des unteren Vorsprungs und die untere Zusatzerhöhung des unteren Vorsprungs abgerundet. Die untere Zusatzerhöhung erstreckt sich bevorzugt unterhalb oder auf einer Höhe mit einer Verlängerung der Oberseite des unteren Vorsprungs. Da die Erhöhungen und Zusatzerhöhungen relativ klein ausgebildet werden können, ist ein bewusstes Auseinanderführen der beiden Verbindungskanten in Gegenrichtung ohne all zu große Hebelwirkung für die Feder möglich, so dass ein Abbrechen des unteren Vorsprungs und/oder der Feder verhindert werden kann.

Das Fußbodenpaneel weist an seiner Längsseite bevorzugt Verbindungskanten auf, deren Erhöhungen und Zusatzerhöhungen formschlüssig von einer anderen Verbindungskante eines anderen Fußbodenpaneels aufnehmbar sind und die Querkanten weisen Verbindungskanten mit abgerundeten Erhöhungen und abgerundeten Zusatzerhöhungen auf. Die Verbindung eignet sich insbesondere für die Längskante von Fußbodenpaneelen, da hier die beiden Paneele ineinandergeführt werden können und anschließend in Längsrichtung der Fußbodenpaneele weitergeführt werden können, bis die Querkante des Fußbodenpaneels mit einer anderen Querkante eines anderen Fußbodenpaneels in Eingriff kommt.

Bei zwei miteinander verbundenen Paneelen bilden sich zwischen dem unteren Vorsprung und der Feder vorzugsweise vier Kontaktflächen aus, so dass eine gute Dichtwirkung in der Verbindungsstelle erreicht und ein Eindringen von Schmutz, Feuchtigkeit usw. verhindert wird. Die Kraft in der Verbindungsstelle kann auf diese vier Verbindungsflächen verteilt werden, so dass die Erhöhungen und Zusatzerhöhungen selbst relativ klein ausgebildet werden können und dennoch ein seitliches Auseinanderziehen der Paneele gut verhindert wird.

Die Verbindungskanten können auch so ineinander liegen, dass sich nur vier Verbindungspunkte ausbilden. Damit wird zwar keine ganz so gute Abdichtung wie durch vier Verbindungsflächen erreicht, es ist jedoch ein horizontales Ineinanderschieben ohne bogenförmige Bewegung zweier Paneele möglich.

Die Erfindung wird im folgenden anhand der beiliegenden Zeichnungen an einigen Ausführungsformen näher erläutert. Es zeigen:
- **Figur 1**: eine Schnittansicht zweier Verbindungskanten gemäß einer ersten Ausführungsform der Erfindung beim Zusammenfügen;
- **Figur 2**: die Verbindungskanten aus **Figur 1** nach dem Zusammenfügen;
- **Figur 3**: zwei Verbindungskanten gemäß einer zweiten Ausführungsform der Erfindung beim Zusammenfügen;
- **Figur 4**: die beiden Verbindungskanten aus **Figur 3** nach dem Zusammenfügen;
- **Figur 5**: ein Fußbodenpaneel in Schnittdarstellung zusammen mit den zur Ausbildung der Verbindungskanten notwendigen Werkzeugen.

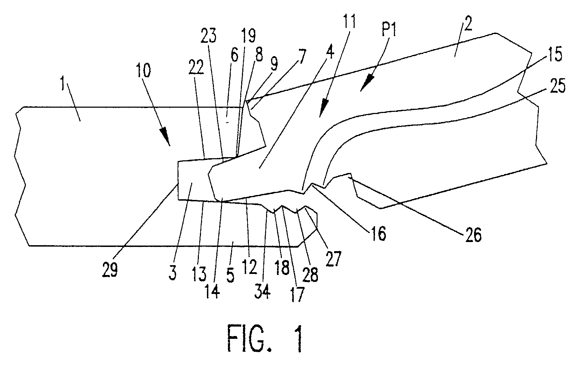

Ein Verbindungspaneel 1 weist gemäß **Figur 5** eine erste Verbindungskante 10 und auf der gegenüberliegenden Seite eine zweite Verbindungskante 11 auf. Die beiden Verbindungskanten sind dabei so ausgebildet, dass sie zum gegenseitigen Eingriff ineinander geeignet sind, wie es in **Figur 1** und **2** gezeigt ist. Die erste Verbindungskante 10 des Fußbodenpaneels 1 weist dabei einen oberen Vorsprung 6, einen unteren Vorsprung 5 sowie eine zwischen den beiden Vorsprüngen angeordnete Nut 3 auf. Am oberen Ende des oberen Vorsprungs 6 ist eine Anlagekante 8 ausgebildet. Die Nut 3 weist einen Nutgrund 29 auf und wird durch die Oberseite 13 des unteren Vorsprungs 5 sowie die Unterseite 22 des oberen Vorsprungs 6 begrenzt, wobei die Unterseite 22 des oberen Vorsprungs 6 und die Oberseite 13 des unteren Vorsprungs 5 zum Nutgrund 29 hin geneigt verlaufen, so dass die Nut 3 zum Nutgrund 29 hin sich verjüngt. Am äußeren Ende des unteren Vorsprungs 5 ist ein Verbindungsprofil ausgebildet, das eine untere Erhöhung 27 und eine in Richtung Nutgrund 29 daneben ausgebildete untere Vertiefung 28 aufweist. Erfindungsgemäß ist neben der unteren Vertiefung 28 eine untere Zusatzerhöhung 17 sowie eine zum Nutgrund 29 hin daneben ausgebildete untere Zusatzvertiefung 18 vorgesehen. Dabei liegen sowohl die untere Erhöhung als auch die untere Zusatzerhöhung 17 im Wesentlichen auf der Linie der Verlängerung der Oberseite 13 des unteren Vorsprungs 5, sie können jedoch auch etwas darüber hinausragen.

Das Fußbodenpaneel 2 weist an seiner zweiten Verbindungskante 11 eine Feder 4 auf, die zum Einfügen bzw. Eingriff in die Nut 3 geeignet ist. Oberhalb der Feder 4 ragt ein Anschlusssteg 7 nach außen hervor, an dessen Außenseite eine zweite Anlagekante 9 ausgebildet ist, die bei einer Verbindung der beiden Verbindungskanten an der ersten Anlagekante 8 des ersten Fußbodenpaneels 1 anliegt. Die Feder 4 weist zumindest im Wesentlichen ebene, vorzugsweise ganz ebene Oberseite 23 und Unterseite 12 auf, die in Richtung zur Federvorderseite 30 hin geneigt aufeinander zulaufen, so dass die Feder 4 sich verjüngend ausgebildet ist. An der Unterseite der Feder 4 ist ein zweites Verbindungsprofil ausgebildet, das eine obere Vertiefung 26 aufweist, die das untere Ende der Feder 4 definiert, sowie eine neben der oberen Vertiefung 26 ausgebildete obere Erhöhung 25. Erfindungsgemäß sind weiterhin eine obere Zusatzerhöhung 15 neben der oberen Erhöhung 25 sowie zwischen der oberen Erhöhung 25 und der oberen Zusatzerhöhung 15 eine obere Zusatzvertiefung 16 ausgebildet.

Die beiden Verbindungskanten 10 und 11 der Fußbodenpaneele 1 und 2 werden gemäß dem Pfeil P1 der **Figur 1** durch eine bogenförmige Relativbewegung ineinandergefügt. Dabei liegt das Fußbodenpaneel 1 mit der ersten Verbindungskante 10 bereits auf dem Untergrund auf, so dass das zweite Fußbodenpaneel 2 mit der zweiten Verbindungskante 11 gemäß dem Pfeil P1 durch die bogenförmige Bewegung eingesetzt werden kann. Dabei wird die Feder 4 in die Nut 3 eingeführt, wobei die Oberseite 23 der Feder 4 an einem ersten Gleitpunkt 19 des oberen Vorsprungs 6 entlanggleiten kann und ein unterer Gleitpunkt 14 an der Federunterseite an der Oberseite 13 des unteren Vorsprungs 5 entlanggleiten kann. Zumindest in der Endphase der Einführbewegung können dabei die Anlagekanten 8, 9 aneinanderliegen, so daß sich eine im Wesentlichen kreisförmige Einführbewegung ergibt, bis die beiden Verbindungskanten 10, 11 gemäß Figur 2 ineinandergefügt sind.

Im ineinandergefügten Zustand gemäß **Figur 2** bilden die Oberseiten 35, 36 sowie die Unterseiten 37, 38 der Fußbodenpaneele 1, 2 gerade Linien aus, wobei insbesondere die Oberseiten 35, 36 eine unterbrechungsfreie Linie bilden. Die beiden Fußbodenpaneele 1, 2 liegen insbesondere an ihren Anlagekanten 8, 9 im oberen Bereich sowie im unteren Bereich in den beiden Verbindungsprofilen aneinander. Dabei bilden sich ein oberer Freiraum 21 zwischen den Anlagekanten und dem durch den Gleitpunkt 19 und der Federoberseite 23 gebildeten Kontaktpunkt heraus, sowie ein unterer Freiraum 20 zwischen dem Nutgrund 29 und der Federvorderseite 30. In diese Freiräume 20, 21 können insbesondere Partikel wie Staub etc., die an den Verbindungskanten vor dem Zusammenfügen anlagen, gedrückt werden, ohne dass hierdurch die Verbindung zwischen den beiden Fußbodenpaneelen 1, 2 gestört wird. An den Unterseiten 37, 38 ist zwischen einer im Wesentlichen vertikal verlaufenden unteren Kante 32 der zweiten Verbindungskante 11 und einer ebenfalls im Wesentlichen vertikal verlaufenden unteren Kante 33 am unteren Vorsprung 5 der ersten Verbindungskante 10 ein Abstand 31 ausgebildet, so dass die Anlage im unteren Bereich durch die beiden Verbindungsprofile gewährleistet wird. Hierbei liegen die untere Erhöhung 27 des unteren Vorsprungs 5 in der oberen Vertiefung 26, die untere Zusatzerhöhung 17 in der oberen Zusatzvertiefung 16, die obere Erhöhung 25 in der unteren Vertiefung 28 sowie die obere Zusatzerhöhung 15 in der unteren Zusatzerhöhung 18 formschlüssig an. Die obere Zusatzerhöhung 15 liegt dabei mit einer Flanke an einer unteren Zusatzanlagefläche 34 des unteren Vorsprungs 5 an.

Somit wird eine stabile Verbindung gewährleistet, bei der eine gute Abdichtung zwischen den Anlagekanten 8, 9 an den Oberseiten 35, 36 sowie eine stabile und sehr dichte Verbindung durch die beiden Verbindungsprofile im unteren Bereich erreicht wird. Aufgrund der guten Dichtwirkung von vier Kontaktflächen zwischen dem unteren Vorsprung 5 und der Feder 4 wird ein Eindringen von Schmutz, Feuchtigkeit etc. in die innere Verbindung verhindert. Die Kraft kann auf diese vier Verbindungsflächen verteilt werden, so dass die Erhöhungen und Zusatzerhöhungen selbst relativ klein ausgebildet werden können und dennoch ein laterales Auseinanderziehen gut verhindert wird. Die beiden Fußbodenpaneele 1, 2 können mit einer relativ geringen Verspannung oder sogar mit gar keiner Verspannung verbunden werden, was die Gefahr einer Materialermüdung verringert. Da die Erhöhungen und Zusatzerhöhungen relativ klein ausgebildet werden können, ist ein bewusstes Auseinanderführen der beiden Verbindungskanten in Gegenrichtung entlang Pfeil P1 ohne all zu große Hebelwirkung für die Feder 4 möglich, so dass ein Abbrechen des unteren Vorsprungs 5 und/oder der Feder 4 verhindert werden kann.

Die in den **Figuren 1** und **2** gezeigte Verbindung eignet sich insbesondere für die Längskante von Fußbodenpaneelen 1, 2, da hier die beiden Paneele gemäß der Pfeilbewegung P1 ineinandergeführt werden können und anschließend in Längsrichtung der Fußbodenpaneele weitergeführt werden können, bis die Querkante der Fußbodenpaneele 2 an eine andere Querkante einer anderen Fußbodenpaneele zum Anliegen kommt.

Bei der Ausführungsform der **Figur 3** entsprechen einige Teile der Verbindungskanten 110, 111 denjenigen aus **Figur 1** und **2.** Die erste Verbindungskante 110 der ersten Fußbodenpaneele 1 weist dementsprechend einen oberen Vorsprung 6, einen unteren Vorsprung 105 und eine hierdurch ausgebildete Nut 3 auf. Das Verbindungsprofil der ersten Verbindungskante 110 weist eine untere Erhöhung 127, eine daneben zum Nutgrund hin angeordnete untere Vertiefung 128, eine daneben angeordnete untere Zusatzerhöhung 117 sowie eine neben ihr angeordnete untere Zusatzvertiefung 118 auf, die wiederum zum Nutgrund 29 hin durch eine untere Zusatzanlagefläche 134 begrenzt ist. Die zweite Verbindungskante 111 weist eine Feder 104 auf, an deren Unterseite eine obere Vertiefung 126 das untere Ende der Feder 104 definiert. Neben der oberen Vertiefung 126 ist eine obere Erhöhung 125, eine neben ihr angeordnete obere Zusatzvertiefung 116 sowie eine obere Zusatzerhöhung 115 ausgebildet, wobei die obere Zusatzvertiefung 116 zwischen der oberen Erhöhung 125 und der oberen Zusatzerhöhung 115 ausgebildet ist.

Die Höhe der Vertiefungen und Zusatzvertiefungen der **Figuren 1, 2** kann beispielsweise ein bis zwei Zwanzigstel der Gesamthöhe des Fußbodenpaneels entsprechen, **in Figur 3**, **4** kann sie beispielsweise ein bis drei, vorzugsweise ein bis zwei Dreißigstel der Gesamthöhe des Fußbodenpaneels entsprechen.

Die beiden Fußbodenpaneele 1, 2 können gemäß den Pfeilen P2 und P3 durch eine geradlinige Relativbewegung ineinandergefügt werden, wobei die obere Erhöhung 125, die obere Zusatzerhöhung 115, die untere Erhöhung 127 und die untere Zusatzerhöhung 117 aneinandergleiten, was durch die Abrundungen erleichtert wird. Hierbei ist es grundsätzlich möglich, dass beim Ineinanderfügen der untere Vorsprung 105 bzw. auch die Feder 104 nicht weggebogen werden muss, es ist jedoch auch ein Ineinanderfügen mit einer leichten Aufbiegung insbesondere des unteren Vorsprungs 105 möglich. Gemäß **Figur 4** liegen die beiden Kanten entsprechend derartig ineinander, daß Verbindungspunkte 40, 41, 42 und 43 zwischen den Verbindungskanten 110, 111 ausgebildet werden. Somit ergibt sich zwar keine ganz so gute Abdichtung wie durch die vier Verbindungsflächen der **Figur 2**, es ist jedoch ein Ineinanderschieben ohne bogenförmige Bewegung und dennoch eine gute Abdichtung durch die vier Kontaktpunkte möglich.

Die erfindungsgemäßen Verbindungskanten 10, 11, 110, 111 können gemäß **Figur 5** einfach hergestellt werden, indem entsprechende Fräsmaschinen oder andere Werkzeuge 40, 41, 42, 43 entlang der Pfeilrichtungen geradlinig direkt auf die Kanten bewegt werden, ohne dass kompliziertere hintergreifende Strukturen ausgeformt werden müssen und die Fräsmaschinen z. B. bogenförmig geführt werden müssen. Dies kommt insbesondere auch den Fräskopfen 50, 51, 52, 53 zugute, die somit eine geringere Abnutzung erfahren.

### Bezugszeichenliste

- 1, 2: Fußbodenpaneel
- 3: Nut
- 4, 104: Feder
- 5, 105: unterer Vorsprung
- 6: oberer Vorsprung
- 7: Anschlusssteg
- 8: erste Anlagekante (des Anschlussstegs)
- 9: zweite Anlagekante (des oberen Vorsprungs)
- 10, 110: erste Verbindungskante
- 11, 111: zweite Verbindungskante
- 12, 112: Unterseite der Feder
- 13, 113: Oberseite des unteren Vorsprungs
- 14: Gleitkante an Federunterseite
- 15, 115: obere Zusatzerhöhung in Feder
- 16, 116: obere Zusatzvertiefung in Feder
- 17, 117: untere Zusatzerhöhung in unterem Vorsprung
- 18, 118: untere Zusatzvertiefung in unterem Vorsprung
- 19: Gleitpunkt
- 20: unterer Freiraum
- 21: oberer Freiraum
- 22: Unterseite des oberen Vorsprungs
- 23: Oberseite der Feder
- 25, 125: obere Erhöhung in Feder
- 26, 126: obere Vertiefung
- 27, 127: untere Erhöhung im unteren Vorsprung
- 28, 128: untere Vertiefung im unteren Vorsprung
- 29: Nutgrund
- 30: Federvorderseite
- 31: Abstand zum unteren Vorsprung und unterer Kante
- 32: untere Kante der zweiten Verbindungskante
- 33: untere Kante des unteren Vorsprungs
- 34: untere Zusatzanlagefläche
- 35 - 38: Ober- und Unterseite der Fußbodenpaneele 1, 2
- 40 - 43: Fräsmaschinen
- 45: unteres Verbindungsprofil
- 46: oberes Verbindungsprofil
- 50 - 53: Fräsköpfe

## Patentansprüche

1. Fußbodenpaneel mit einer an mindestens einer Seitenkante [Verbindungskante 10, 110] ausgebildeten Feder (4, 104) und einer an der gegenüberliegenden Seitenkante [Verbindungskante 11, 111] ausgebildeten, von einem oberen Vorsprung (6) und einem seitlich über den oberen Vorsprung (6) hinausragenden unteren Vorsprung (5, 105) begrenzten Nut (3), wobei die Feder (4, 104) und die Nut (3) mit zueinander korrespondierenden Rastmitteln (15, 25; 18, 28; 115, 125; 118, 128) versehen sind, so dass zwei gleiche Paneele (1, 2) sowohl in horizontaler als auch in vertikaler Richtung miteinander verriegelbar sind, und wobei die Feder (4, 104) und die Nut (3) mit den zugehörigen Rastmitteln (15, 25; 18, 28; 115, 125; 118, 128) so ausgebildet sind, dass zwei Paneele (1, 2) sowohl durch horizontales Verschieben in Richtung (P2, P3) aufeinander zu als auch durch winkliges Einführen der Feder (4, 104) in die Nut (3) miteinander verbindbar sind, **dadurch gekennzeichnet, dass** das zu der Nut (3) gehörige Rastmittel (18, 28; 118, 128) vollständig in dem Bereich des unteren Vorsprungs (5, 105) angeordnet ist, der seitlich über den oberen Vorsprung (6) hinausragt.

2. Fußbodenpaneel nach Anspruch 1, **dadurch gekennzeichnet, dass** die Rastmittel gebildet werden durch an der Unterseite (12, 112) der Feder (4, 104) ausgebildete Zusatzerhöhungen (15, 25; 115, 125) und an der Oberseite (13, 113) des unteren Vorsprungs (5, 105) ausgebildete Zusatzvertiefungen (18, 28; 118, 128).

3. Fußbodenpaneel nach Anspruch 1, **dadurch gekennzeichnet, dass** die Oberseite (23) und die Unterseite (12) der Feder (4, 104) ebene, zueinander geneigte Flächen aufweisen und die Oberseite (13, 113) des unteren Vorsprungs (5, 105) und die Unterseite (22) des oberen Vorsprungs (6) auch ebene, zueinander geneigte Flächen aufweisen.

4. Fußbodenpaneel nach Anspruch 1 oder 3, **dadurch gekennzeichnet, dass** die Oberseite (23) der Feder (4, 104) und die Unterseite (22) des oberen Vorsprungs (6) sowie die Unterseite (12, 112) der Feder (4, 104) und die Oberseite (13, 113) des unteren Vorsprungs (5, 105) bei Ineinanderfügen der Verbindungskanten (10, 110; 11, 111) jeweils aneinanderliegen.

5. Fußbodenpaneel nach einem der Ansprüche 1 bis 4, **dadurch gekennzeichnet, dass** die erste Verbindungskante (10, 110) und die zweite Verbindungskante (11, 111) derartig ausgebildet sind, dass sie ohne zeitweises Verformen ineinanderfügbar sind.

6. Fußbodenpaneel nach einem der Ansprüche 1 bis 5, **dadurch gekennzeichnet, dass** bei Ineinanderfügen einer ersten Verbindungskante (10, 110) und einer zweiten Verbindungskante (11, 111) ein oberer Freiraum (21) zwischen den Anlagekanten (8, 9) und der Feder (4, 104) sowie ein unterer Freiraum (20) zwischen einer Vorderseite (30), der Feder (4, 104) und einem Nutgrund (29) der Aussparung (3) gebildet werden.

7. Fußbodenpaneel nach einem der Ansprüche 1 bis 6, **dadurch gekennzeichnet, dass** bei Ineinanderfügen einer ersten Verbindungskante (10, 110) und einer zweiten Verbindungskante (11, 111) zwischen einer unteren Kante (32) der zweiten Verbindungskante (11, 111) und einer unteren Kante (33) des unteren Vorsprungs (5, 105) ein Abstand (31) verbleibt.

8. Fußbodenpaneel nach einem der Ansprüche 1 bis 7, **dadurch gekennzeichnet, dass** bei Ineinanderfügen zweier Verbindungskanten (10, 11) die obere Erhöhung (25) und obere Zusatzerhöhung (15) der Feder (4, 104) in der unteren Vertiefung (28) und unteren Zusatzvertiefung (8) des unteren Vorsprungs (5) sowie die untere Zusatzerhöhung (17) in die obere Zusatzvertiefung (16) der Feder (4) formschlüssig aufnehmbar sind.

9. Fußbodenpaneel nach Anspruch 8, **dadurch gekennzeichnet, dass** an der ersten Verbindungskante (10) am oberen Vorsprung (6) ein Gleitpunkt (19) zur Anlage an der Oberseite (23) der Feder (4) einer anliegenden zweiten Verbindungskante ausgebildet ist.

10. Fußbodenpaneel nach einem der Ansprüche 1 bis 7, **dadurch gekennzeichnet, dass** die obere Erhöhung (125) der Feder (104), die obere Zusatzerhöhung (114) der Feder (104), die untere Erhöhung (127) des unteren Vorsprungs (105) und die untere Zusatzerhöhung des unteren Vorsprungs (105) abgerundet sind.

11. Fußbodenpaneel nach Anspruch 10, **dadurch gekennzeichnet, dass** die untere Zusatzerhöhung (17, 117) sich unterhalb oder auf einer Höhe mit einer Verlängerung der Oberseite (13, 113) des unteren Vorsprungs (5, 105) erstreckt.

12. Fußbodenpaneel nach Anspruch 8 oder 9 und einem der Ansprüche 10 oder 11, **dadurch gekennzeichnet, dass** seine Längsseiten Verbindungskanten (10, 11) aufweisen, deren Erhöhungen (25, 27) und Zusatzerhöhungen (15, 17) formschlüssig von einer anderen Verbindungskante (11, 10) einem anderen Fußbodenpaneel aufnehmbar sind und die Querkanten Verbindungskanten (110, 111) mit abgerundeten Erhöhungen (125, 127) und abgerundete Zusatzerhöhungen (115, 117) aufweisen.

13. Fußbodenpaneel nach Anspruch 1, **dadurch gekennzeichnet, dass** bei zwei miteinander verbundenen Paneelen (1, 2) zwischen dem unteren Vorsprung (5, 105) und der Feder (4, 104) vier Kontaktflächen ausgebildet sind.

14. Fußbodenpaneel nach Anspruch 1, **dadurch gekennzeichnet, dass** bei zwei miteinander verbundenen Paneelen (1, 2) zwischen dem unteren Vorsprung (5, 105) und der Feder (4, 104) vier Verbindungspunkte (40, 41, 42, 43) ausgebildet sind.
